# EUROPÄISCHE PATENTSCHRIFT

(11) **EP 0 911 237 B1**
(45) Veröffentlichungstag und Bekanntmachung des Hinweises auf die Patenterteilung: **12.04.2006**
(21) Anmeldenummer: 98115410.7
(22) Anmeldetag: 17.08.1998
(51) Int. Cl.: B60T 17/04, B60T 8/00, B60T 15/18, B60T 13/26

(54) **Druckmittelbetätigte Fahrzeugbremsanlage**
Pressure actuated braking system for vehicles
Système de freinage actionné par pression pour véhicules

(30) Priorität: 21.10.1997 DE 19746342
(43) Veröffentlichungstag der Anmeldung: 28.04.1999
(73) Patentinhaber: WABCO GmbH & CO. OHG, 30453 Hannover (DE)
(72) Erfinder: Kiel, Bernd, 31515 Wunstorf (DE); Wirth, Andreas, 31029 Banteln (DE); Deike, Karl-Heinz, 30982 Pattensen (DE)
(74) Vertreter: Schrödter, Manfred

(56) Entgegenhaltungen:
- EP-A- 0 481 227
- EP-A- 0 726 190
- EP-A- 0 738 640
- DE-A- 3 230 970

## Beschreibung

Die Erfindung betrifft eine druckmittelbetätigte Fahrzeugbremsanlage gemäß dem Oberbegriff des Patentanspruchs 1.

Eine derartige Fahrzeugbremsanlage ist aus der DE 195 04 393 C1 bekannt.

Die bekannte Fahrzeugbremsanlage besitzt zwei als einfache Membran-Zylinder ausgebildete Bremszylinder, die an der einen Fahrzeugachse, im allgemeinen der Vorderachse des Fahrzeugs, angeordnet sind, und zwei als Federspeicher-Zylinder ausgebildete Bremszylinder, die an der anderen Fahrzeugachse, im allgemeinen der Hinterachse des Fahrzeugs, angeordnet sind. Zur Versorgung der Bremszylinder der Hinterachse mit Bremsdruck dient eine erste Steuerventileinrichtung und zur Versorgung der Bremszylinder der Vorderachse mit Bremsdruck dient eine zweite Steuerventileinrichtung.

Um die Versorgung des einen der beiden Bremszylinder der einen Fahrzeugachse mit Bremsdruck bei einem Defekt in dem diese Bremszylinder aufweisenden Bremskreis sicherzustellen, ist zwischen dem einen Bremszylinder dieser Fahrzeugachse und der zur Versorgung beider Bremszylinder dieser Fahrzeugachse dienenden Steuerventileinrichtung eine zusätzliche Steuerventileinrichtung angeordnet, über welche dieser Bremszylinder sowohl mit dem Druck der Druckmittelquelle des beiden Bremszylindern zugeordneten Bremskreises als auch mit dem Druck einer von der Druckmittelquelle dieses Bremskreises unabhängigen Druckmittelquelle beaufschlagbar ist.

Die zusätzliche Steuerventileinrichtung wird, wie auch die den beiden Bremszylindern der Vorderachse und den beiden Bremszylindern der Hinterachse des Fahrzeugs zugeordneten Steuerventileinrichtungen, von den Signalen eines Bremswertgebers gesteuert.

Die Federspeicher-Bremszylinder haben zusätzlich zu ihrer Funktion als Betriebsbremse noch die Funktion einer Feststellbremse. Zu diesem Zweck besitzen sie zusätzlich zur Betriebsdruckkammer eine Hilfsdruckkammer, die über ein Handbremsventil wahlweise mit einer Druckmittelquelle oder mit einer Druckmittelsenke verbindbar ist. Bei Druckbeaufschlagung der Hilfsdruckkammer wird ein Bremskolben des Federspeicher-Bremszylinders gegen die Kraft einer Speicherfeder in eine Bremslösestellung und bei Entlüften der Hilfsdruckkammer wird der Bremskolben von der Speicherfeder in eine Bremsbetätigungsstellung gebracht.

Wird ein mit einer solchen Fahrzeugbremsanlage ausgerüstetes Fahrzeug auf einer Gefällestrecke geparkt, so wird die Feststellbremse betätigt und das Fahrzeug so mittels der beiden der Hinterachse des Fahrzeugs zugeordneten Federspeicher-Bremsen daran gehindert, sich selbsttätig in Bewegung zu setzen.

Bei sehr schweren Fahrzeugen werden die als einfache Membran-Zylinder ausgebildeten Bremszylinder an der Vorderachse des Fahrzeugs durch Federspeicher-Bremszylinder ersetzt, um auch auf Straßen mit sehr starkem Gefälle das Fahrzeug sicher parken zu können.

Neben erhöhtem Kostenaufwand ist die Ausrüstung der Fahrzeugbremsanlage mit an der Vorderachse des Fahrzeugs angeordneten Federspeicher-Bremszylindern auch mit erhöhtem Platzbedarf verbunden.

Der Erfindung liegt die Aufgabe zugrunde, eine druckmittelbetätigte Fahrzeugbremsanlage der eingangs erwähnten Art zu schaffen, die es ermöglicht, in den Bremszylinder, welchem die zusätzliche Steuerventileinrichtung zugeordnet ist, auch dann Druck einzusteuern, wenn der Bremswertgeber nicht betätigt wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, durch die Verwendung einer von einer Betätigung des Bremswertgebers unabhängig betätigbaren Bremssteuereinrichtung zum Steuern der zusätzlichen Steuerventileinrichtung sowohl eine Hilfsbremse, mit welcher bei Ausfall des die beiden Bremszylinder aufweisenden Bremskreises noch eine sichere Bremsung des Fahrzeugs möglich ist, als auch eine Feststellbremseinrichtung zu haben, mit welcher zumindest für eine kurze Zeit, in welcher Bremskeile vor die Räder des Fahrzeugs gelegt werden können, das Fahrzeug auch auf einer Straße mit einem starken Gefälle sicher gehalten werden kann.

In vorteilhafter Weise ist die zusätzliche Steuerventileinrichtung so ausgebildet, daß bei Beaufschlagung der Steuerkammer mit Steuerdruck das Einlaßventil in seine Schließstellung und das Auslaßventil in seine Offenstellung und bei Abbau des Druckes in der Steuerkammer das Auslaßventil in seine Schließstellung und das Einlaßventil in seine Offenstellung gelangen. Durch diese besondere Ausbildung der zusätzlichen Steuerventileinrichtung ist es möglich geworden zum Steuern der zusätzlichen Steuerventileinrichtung das als Bremssteuereinrichtung dienende Handbremsventil zu verwenden, welches in der Fahrzeugbremsanlage zum Betätigen der Feststellbremse dient.

Dadurch, daß die der Kraft des Steuerdruckes entgegengerichtet auf den Steuerkolben einwirkende, als Rückstellkraft für den Steuerkolben dienende Kraft in vorteilhafter Weise von einer Feder erzeugt wird, kann in den Bremszylinder Druckmittel abgestuft eingesteuert werden.

Durch die am Fortsatz des Steuerkolbens angeordnete, als eine zusätzliche Wirkfläche für den Steuerkolben dienende Fläche, welche vom Druck in der Druckmittelausgangskammer beaufschlagt wird, wird der Steuerkolben in einer eindeutigen Stellung (Einlaßventil geschlossen-Auslaßventil geöffnet) gehalten, wenn gleichzeitig Steuerdruck in der Steuerkammer der zusätzlichen Steuerventileinrichtung ansteht.

Anhand der Zeichnung wird nachfolgend ein Ausführungsbeispiel der Erfindung näher erläutert.

Es zeigen:
- Fig. 1: schematisch eine druckmittelbetätigte Fahrzeugbremsanlage mit der erfindungsgemäßen Anordnung einer zusätzlichen Steuerventileinrichtung für einen Bremszylinder einer Fahrzeugachse und
- Fig. 2: die zusätzliche Steuerventileinrichtung im Schnitt.

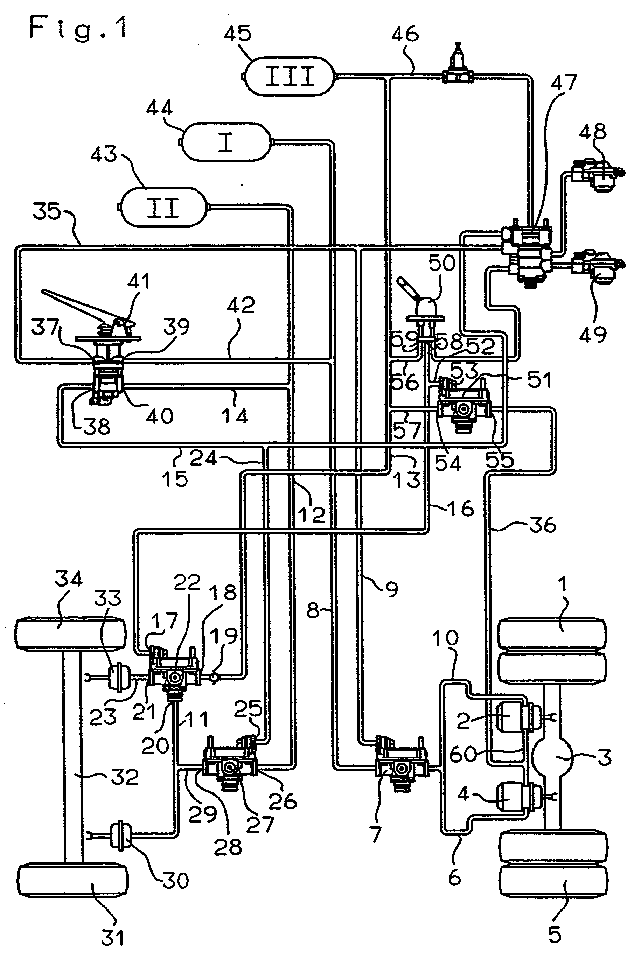

In Fig. 1 ist eine dreikreisige Bremsanlage für ein zweiachsiges Fahrzeug dargestellt, wobei der dritte Kreis zur Versorgung einer Anhänger-Bremsanlage dient.

Eine als Hinterachse (3) dienende erste Achse weist zwei Räder (1 und 5) auf. Jedem Rad (1 bzw. 5) ist ein als Federspeicher-Bremszylinder ausgebildeter Bremszylinder (2 und 4) zugeordnet. Die beiden Bremszylinder (2 und 4) sind über Druckmittelleitungen (6 und 10) an den Ausgang einer ersten Steuerventileinrichtung (7) angeschlossen. Der Eingang der ersten Steuerventileinrichtung (7) ist über eine Druckmittelleitung (8) mit einem als Druckmittelquelle zur Versorgung der Bremszylinder (2 und 4) mit Druckmittel dienenden Druckmittel-Vorratsbehälter (44) verbunden. Der Steuereingang der ersten Steuerventileinrichtung (7) steht über Druckmittelleitungen (9 und 35) mit einem als Steuerausgang dienenden ersten Druckmittelausgang (37) eines als Motorwagen-Bremsventil (41) ausgebildeten Mehrkreis-Bremswertgebers in Verbindung. Ein dem ersten Druckmittelausgang (37) zugeordneter erster Druckmitteleingang (39) des Motorwagen-Bremsventils (41) ist über eine Druckmittelleitung (42) und die Druckmittelleitung (8) an den Druckmittel-Vorratsbehälter (44) angeschlossen. Die Bremszylinder (2 und 4) der Hinterachse (3) bilden zusammen mit den Druckmittelleitungen (6 und 10), der ersten Steuerventileinrichtung (7), den Druckmittelleitungen (8, 9 und 35), dem Motorwagen-Bremsventil (41) und der Druckmittelleitung (42) sowie dem Druckmittel-Vorratsbehälter (44) einen als Hinterachsbremskreis dienenden ersten Bremskreis (I) der Fahrzeugbremsanlage.

Eine als Vorderachse (32) dienende zweite Achse des Fahrzeugs weist ein erstes Rad (34) und ein zweites Rad (31) auf. Dem ersten Rad (34) ist ein erster Bremszylinder (33) und dem zweiten Rad (31) ist ein zweiter Bremszylinder (30) zugeordnet. Der zweite Bremszylinder (30) ist über eine Druckmittelleitung (11) und eine mit dieser verbundene Druckmittelleitung (29) mit dem Druckmittelausgang (28) einer zweiten Steuerventileinrichtung (27) verbunden. Ein Druckmitteleingang (26) der zweiten Steuerventileinrichtung (27) ist über eine Druckmittelleitung (12) mit einem Druckmittel-Vorratsbehälter (43) verbunden, der als Druckmittelquelle zur Versorgung der Bremszylinder (33 und 30) der Vorderachse (32) des Fahrzeugs mit Druckmittel dient. Ein Steuereingang (25) der zweiten Steuerventileinrichtung (27) steht über eine Druckmittelleitung (24) und eine mit dieser verbundene Druckmittelleitung (15) mit einem als Steuerausgang dienenden zweiten Druckmittelausgang (38) des Motorwagen-Bremsventils (41) in Verbindung. Ein dem zweiten Druckmittelausgang (38) zugeordneter zweiter Druckmitteleingang (40) des Motorwagen-Bremsventils (41) ist über eine Druckmittelleitung (14) und die Druckmittelleitung (12) ebenfalls mit dem Druckmittel-Vorratsbehälter (43) verbunden.

Der erste Bremszylinder (33) der Vorderachse (32) ist über eine Druckmittelleitung (23) sowie eine zusätzliche Steuerventileinrichtung (22) und die Druckmittelleitungen (11 und 29) mit dem Druckmittelausgang (28) der zweiten Steuerventileinrichtung (27) verbunden. Die zusätzliche Steuerventileinrichtung (22) besitzt einen Druckmitteleingang (18), einen Druckmittelausgang (21), einen Steuereingang (17) und einen Druckmittelauslaß (20), der die Funktion eines zusätzlichen Druckmitteleingangs hat.

Über eine Druckmittelleitung (13) sowie eine mit dieser verbundene Druckmittelleitung (46) steht der Druckmitteleingang (18) der zusätzlichen Steuerventileinrichtung (22) mit einem Druckmittel-Vorratsbehälter (45) in Verbindung. An den Druckmittel-Vorratsbehälter (45) sind über die Druckmittelleitung (46) und eine Ventileinrichtung (47) zwei Kupplungsköpfe (48 und 49) angeschlossen, die zur Verbindung der Bremsanlage des Motorfahrzeugs mit der Bremsanlage eines Anhängerfahrzeugs dienen. Der Druckmittelauslaß (20) der zusätzlichen Steuerventileinrichtung (22) ist über die Druckmittelleitung (11) und die Druckmittelleitung (29) mit dem Druckmittelausgang (28) der zweiten Steuerventileinrichtung (27) verbunden. Der Druckmittelausgang (21) der zusätzlichen Steuerventileinrichtung (22) steht über die Druckmittelleitung (23) mit dem ersten Bremszylinder (33) der Vorderachse (32) in Verbindung. Der Steuereingang (17) der zusätzlichen Steuerventileinrichtung (22) steht über eine Druckmittelleitung (16) mit einem Druckmittelausgang (58) einer als Handbremsventil (50) ausgebildeten Bremssteuereinrichtung in Verbindung. Ein Druckmitteleingang (59) des Handbremsventils (50) ist über eine Druckmittelleitung (56), die an die Druckmittelleitung (13) angeschlossen ist, mit dem Druckmittel-Vorratsbehälter (45) verbunden.

Über den Druckmitteleingang (18) ist eine Druckmitteleingangskammer der zusätzliche Steuerventileinrichtung (22) mit dem Druckmittel-Vorratsbehälter (45) verbunden und über den als ein weiterer Druckmitteleingang dienenden Druckmittelauslaß (20) sowie die zweite Steuerventileinrichtung (27) ist die Druckmittelausgangskammer der zusätzlichen Steuerventileinrichtung (22) mit dem Druckmittel-Vorratsbehälter (43) verbindbar.

In der Nähe des Druckmitteleingangs (18) der zusätzlichen Steuerventileinrichtung (22) ist in der vom Druckmitteleingang (18) zum Druckmittel-Vorratsbehälter (45) führenden Druckmittelleitung (13) ein vom Druckmittel des Druckmittel-Vorratsbehälter (45) in Richtung auf die Druckmitteleingangskammer der zusätzlichen Steuerventileinrichtung (22) zu in die Offenstellung bringbares Rückschlagventil (19) angeordnet. Das Rückschlagventil (19) dient zum Absichern des zur Versorgung der beiden Bremszylinder (33 und 30) mit Druckmittel dienenden Druckmittel-Vorratsbehälters (43) und des von diesem Druckmittel-Vorratsbehälter (43) unabhängigen Druckmittel-Vorratsbehälters (45) gegeneinander.

Die beiden Bremszylinder (33 und 30) der Vorderachse (32), die Druckmittelleitungen (23, 11 und 29), die zweite Steuerventileinrichtung (27) und die zusätzliche Steuerventileinrichtung (22) sowie die Druckmittelleitungen (24 und 15), das Motorwagen-Bremsventil (41), die Druckmittelleitung (14) und die Druckmittelleitung (12) sowie der Druckmittel-Vorratsbehälter (43) bilden einen als Vorderachsbremskreis dienenden zweiten Bremskreis (II) für die druckmittelbetätigte Fahrzeugbremsanlage.

Über Druckmittelleitungen (36 und 60) stehen die Bremszylinder (2 und 4) der Hinterachse (3) des Fahrzeugs mit einem Druckmittelausgang (55) eines mittels des Handbremsventils (50) steuerbaren Ventils (51) in Verbindung, dessen Druckmitteleingang (54) über eine Druckmittelleitung (57), die Druckmittelleitung (13) und die Druckmittelleitung (46) mit dem Druckmittel-Vorratsbehälter (45) verbunden ist. Ein Steuereingang (53) des steuerbaren Ventils (51) ist über eine Druckmittelleitung(52) und die Druckmittelleitung (16) mit dem Druckmittelausgang (58) des Handbremsventils (50) verbunden. Ein weiterer Druckmmittelausgang des Handbremsventils (50) ist mit einem Druckmitteleingang des als Anhänger-Steuerventil dienenden Ventils (47) verbunden. Die Ventileinrichtungen (47 und 50) und die Kupplungsköpfe (48, 49) sowie die zugehörigen Druckmittelleitungen und der Druckmittel-Vorratsbehälter (45) bilden einen als Anhänger-Bremskreis dienenden dritten Bremskreis (III) der Fahrzeugbremsanlage.

Die erste Steuerventileinrichtung (7) und die zweite Steuerventileinrichtung (27) sind baugleich und vorzugsweise als handelsübliche Relaisventile ausgebildet. Die zusätzliche Steuerventileinrichtung (22) ist als 3/2-Wegeventil ausgebildet, dessen Steuerkolben von einer Feder in Schließrichtung des Auslaßventils und in Öffnungsrichtung des Einlaßventils beaufschlagt wird und von einem Steuerdruck gegen die als Rückstellkraft dienende Kraft der Feder in Schließrichtung des Einlaßventils und in Öffnungsrichtung des Auslaßventils beaufschlagbar ist.

Es wird nachstehend deshalb lediglich die zusätzliche Steuerventileinrichtung beschrieben.

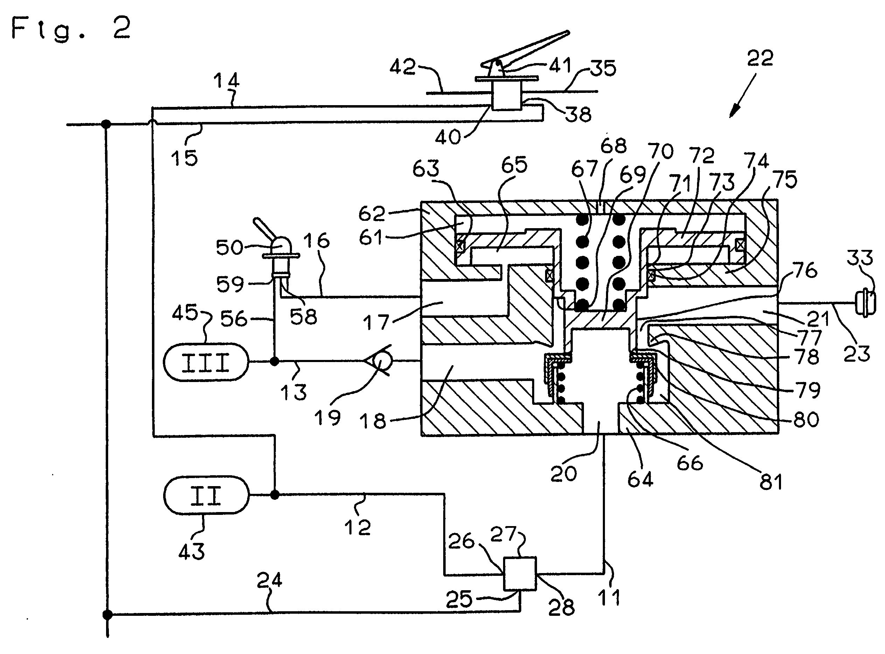

In Fig. 2 ist die dem ersten Bremszylinder (33) der Vorderachse (32) des Fahrzeugs zugeordnete zusätzliche Steuerventileinrichtung (22) im Schnitt dargestellt. Der besseren Übersicht halber sind die Druckmittelanschlüsse der zusätzlichen Steuerventileinrichtung (22) und die von den Druckmittelanschlüssen zu den Druckmittel-Vorratsbehältern, dem Motorwagen-Bremsventil, der zweiten Steuerventileinrichtung (27) und dem Handbremsventil (50) hinführenden Druckmittelleitungen mit den auch in Fig. 1 verwendeten Bezugsziffern versehen.

Die als 3/2-Wegeventil ausgebildete zusätzliche Steuerventileinrichtung (22) weist einen Steuerkolben (72) auf, der in einem Gehäuse (64, 62) angeordnet und in Richtung der Längsachse des Gehäuses (64, 62) bewegbar ist. Das Gehäuse (64, 62) besteht aus einem als Gehäuseunterteil dienenden ersten Gehäuseteil (64) und einem als Gehäuseoberteil dienenden zweiten Gehäuseteil (62), die mittels nicht dargestellter Verbindungsmittel, z. B. Schrauben, miteinander verbunden sind.

Der Steuerkolben (72) besitzt einen zentrisch angeordneten, abgestuften rohrförmigen Fortsatz (76), der sich durch eine koaxial zum Fortsatz (76) in einer Wand (75) des Gehäuses (64, 62) angeordnete Durchgangsöffnung (71) hindurch in Richtung auf ein kombiniertes Einlaß- und Auslaßventil (78, 79, 80) zu erstreckt, welches im Gehäuse (64, 62) angeordnet ist. Ein Dichtring (74), der in einer Nut (73) in der die Durchgangsöffnung (71) begrenzenden Wand angeordnet ist, liegt dichtend an der äußeren Mantelfläche des Fortsatzes (76) an. In dem rohrförmigen Fortsatz (76) ist quer zur Längsachse des rohrförmigen Fortsatzes (76) eine Wand (70) angeordnet.

Die Wand (75) des Gehäuses (64, 62) und der Fortsatz (76) bzw. eine durch eine Stufe am Fortsatz (76) gebildete zusätzliche Wirkfläche (69) des Steuerkolbens (72) begrenzen eine Druckmittelausgangskammer (77). Mit seiner der Wand (75) abgewandten Seite begrenzt der Steuerkolben (72) einen Raum (61), der über eine Öffnung (68) des zweiten Gehäuseteiles (62) mit der Atmosphäre verbunden ist. Mit seiner der Wand (75) zugewandten Seite begrenzt der Steuerkolben (72) eine Steuerkammer (65). Der Steuerkolben (72) trägt auf seinem Umfang einen Dichtring (63), der dichtend an der Wand des Gehäuses (64, 62) anliegt. In dem Raum (61) ist eine Feder (67) angeordnet, die sich mit ihrem einen Ende am zweiten Gehäuseteil (62) abstützt und mit ihrem anderen Ende den Steuerkolben (72) in Richtung auf die Steuerkammer (65) zu beaufschlagt, wobei diese Seite der Feder (67) in den Fortsatz (76) des Steuerkolbens (72) eingetaucht ist und auf der Wand (70) des Fortsatzes (76) aufliegt.

Mittels des Steuerkolbens (72) wird das kombinierte Einlaß- und Auslaßventil (78, 79, 80), über welches die Druckmittelausgangskammer (77) in Abhängigkeit von der Stellung des Steuerkolbens (72) mit einer Druckmitteleingangskammer (81) oder mit einem Druckmittelauslaß (20) verbindbar ist, betätigt. Der Druckmittelauslaß (20) hat die Funktion sowohl eines Druckmittelauslasses als auch eines zusätzlichen Druckmitteleingangs.

Das kombinierte Einlaß- und Auslaßventil (78, 79, 80) besteht aus einem im Gehäuse (64, 62) ortsfest angeordneten ringförmigen Einlaßventilsitz (78), einem Auslaßventilsitz (79) und einem relativ zu den beiden Ventilsitzen (78 und 79) bewegbar angeordneten ringförmigen Ventilglied (80), welches von einer Feder (66) in Richtung auf die beiden Ventilsitze (78 und 79) zu belastet wird. Der Auslaßventilsitz (79) wird von dem freien Ende des zentrisch am Steuerkolben (72) angeordneten Fortsatzes (76) gebildet. Der Fortsatz (76) ist koaxial zum Einlaßventilsitz (78) am Steuerkolben (72) angeordnet und erstreckt sich in die Druckmittelausgangskammer (77) hinein, wobei sein den Auslaßventilsitz (79) bildender freier Endbereich dem Ventilglied (80) zugewandt ist.

Die Druckmitteleingangskammer (81) ist mit einem Druckmitteleingang (18) verbunden. Der Druckmittelauslaß (20)ist über das Auslaßventil (79, 80) des kombinierten Einlaß- und Auslaßventils (78, 79, 80) mit der Druckmittelausgangskammer (77) verbindbar. Der Druckmitteleingang (18) ist über die Druckmittelleitung (13) mit dem Druckmittel-Vorratsbehälter (45) verbunden. In der Druckmittelleitung (13) ist das vom Druckmittel des Druckmittel-Vorratsbehälters (45) in Richtung auf die Druckmitteleingangskammer (81) zu in die Offenstellung bringbare Rückschlagventil (19) angeordnet. Das Rückschlagventil (19) kann selbstverständlich auch im Bereich des Druckmitteleingangs (18) im oder am Gehäuse (64, 62) angeordnet sein.

Die Druckmittelausgangskammer (77) ist über einen Druckmittelausgang (21) und die Druckmittelleitung (23) mit dem ersten Bremszylinder (33) der Vorderachse des Fahrzeugs verbunden. Der mit der Druckmittelausgangskammer (77) über das Auslaßventil (79, 80) verbindbare Druckmittelauslaß (20) des 3/2-Wegeventils steht über die Druckmittelleitung (11) mit dem Druckmittelausgang (28) der zweiten Steuerventileinrichtung (27) in Verbindung. Der Druckmitteleingang (26) der zweiten Steuerventileinrichtung (27) ist über die Druckmittelleitung (12) mit dem Druckmittel-Voratsbehälter (43) verbunden. Der Steuereingang (25) der zweiten Steuerventileinrichtung (27) steht über die Druckmittelleitungen (24 und 15) mit dem Druckmittelausgang (38) des Motorwagen-Bremsventils (41) in Verbindung. Der mit dem Druckmittelausgang (38) verbindbare Druckmitteleingang (40) des Motorwagen-Bremsventils (41) ist über die Druckmittelleitungen (14 und 12) mit dem Druckmittel-Vorratsbehälter (43) verbunden. Die Steuerkammer (65) des 3/2-Wegeventils ist mit einem Steuereingang (17) des Gehäuses (64, 62) verbunden, der über die Druckmittelleitung (16) an den Druckmittelausgang (58) des als Feststell-Bremswertgeber dienenden Handbremsventils (50) angeschlossen ist. Der Druckmitteleingang (59) des Handbremsventils (50) ist über die Druckmittelleitungen (56 und 13) mit dem Druckmittel-Vorratsbehälter (45) verbunden.

Die Steuerkammer (65) des 3/2-Wegeventils ist somit mit dem vom Handbremsventil (50) ausgesteuerten, als Steuersignal für den dritten Bremskreis (III) (Anhänger-Bremskreis) dienenden Druck beaufschlagbar. Die Druckmittelausgangskammer (77) ist bei geöffnetem Auslaßventil (79, 80) und gleichzeitig geschlossenem Einlaßventil (78, 80) des kombinierten Einlaß- und Auslaßventils (78, 79, 80) über den Druckmittelauslaß (20) des 3/2-Wegeventils und die zweite Steuerventileinrichtung (27) mit dem Druck des dem zweiten Bremskreis (II) (Vorderachs-Bremskreis) zugeordneten Druckmittel-Vorratsbehälters (43) beaufschlagbar. Bei geöffnetem Einlaßventil (78, 80) und gleichzeitig geschlossenem Auslaßventil (79, 80) des kombinierten Einlaß- und Auslaßventils (78, 79, 80) ist die Druckmittelausgangskammer (77) über die Druckmitteleingangskammer (81) und den Druckmitteleingang (18) des 3/2-Wegeventils mit dem Druck des vom Druckmittel-Vorratsbehälter (43) für den zweiten Bremskreis (II) unabhängigen Druckmittel-Vorratsbehälters (45) für den dritten Bremskreis (III) (Anhänger-Bremskreis) beaufschlagt. Der Druckabbau in der Druckmittelausgangskammer (77) des 3/2-Wegeventils und somit auch der Druckabbau in dem mit dieser verbundenen Bremszylinder (33) erfolgt über das geöffnete Auslaßventil (79, 80) -bei geschlossenem Einlaßventil (78, 80)- des kombinierten Einlaß- und Auslaßventils (78, 79, 80) und den Druckmittelauslaß (20) des 3/2-Wegeventils sowie die zweite Steuerventileinrichtung (27) .

Die Funktion der vorstehend beschriebenen zusätzlichen Steuerventileinrichtung (22) in der druckmittelbetätigten Fahrzeugbremsanlage wird im Rahmen der Funktion der gesamten Fahrzeugbremsanlage gemäß Fig. 1 nachfolgend näher erläutert.

Bei nicht betätigtem Motorwagen-Bremsventil (41) und betätigter Feststellbremse befindet sich die als 3/2-Wegeventil ausgebildete zusätzliche Steuerventileinrichtung (22) in der dargestellten Schaltstellung. Das Einlaßventil (78, 80) ist geöffnet und das Auslaßventil (79, 80) ist geschlossen. Die Steuerkammer (65) ist über das Handbremsventil (50) mit der Druckmittelsenke (Atmosphäre) verbunden. In der Druckmitteleingangskammer (81), in der Druckmittelausgangskammer (77) und in dem ersten Bremszylinder (33) der Vorderachse (32) des Fahrzeugs steht Druckmittel aus dem Druckmittel-Vorratsbehälter (45) des dritten Bremskreises (III) an, so daß die dem ersten Rad (34) der Vorderachse (32) zugeordnete Bremse angelegt ist. Die Druckmittelausgangskammer (77) ist mittels des Auslaßventils (79, 80) gegen den Druckmittelauslaß (20) abgesperrt. Der Druckmittelauslaß (20) ist über die Druckmittelleitung (11) und das geöffnete Auslaßventil der zweiten Steuerventileinrichtung (27) mit der Druckmittelsenke (Atmosphäre) verbunden. Am Druckmitteleingang (26) der zweiten Steuerventileinrichtung (27) steht Druckmittel aus dem Druckmittel-Vorratsbehälter (43) des zweiten Bremskreises (II) an. Der Druckmitteleingang (26) und der Druckmittelausgang (28) der zweiten Steuerventileinrichtung (27) sind mittels des sich in der Schließstellung befindlichen Einlaßventils der zweiten Steuerventileinrichtung (27) gegeneinander abgesperrt. Der dem zweiten Rad (31) der Vorderachse (32) des Fahrzeugs zugeordnete zweite Bremszylinder (30) ist drucklos. Die Bremse des zweiten Rades (31) ist gelöst.

Desgleichen steht in der Druckmitteleingangskammer der ersten Steuerventileinrichtung (7) Druckmittel aus dem Druckmittel-Vorratsbehälter (44) des ersten Bremskreises (I) (Hinterachs-Bremskreis) an. Die Druckmittelausgangskammer und die Druckmitteleingangskammer sind mittels eines sich in seiner Schließstellung befindenden Einlaßventils der ersten Steuerventileinrichtung (7) gegeneinander abgesperrt und die Druckmittelausgangskammer ist über ein Auslaßventil der ersten Steuerventileinrichtung (7) mit der Druckmittelsenke (Atmosphäre) verbunden. Die mit der Druckmittelausgangskammer der ersten Steuerventileinrichtung (7) verbundenen Betriebsdruckkammern der Bremszylinder (2 und 4) der Hinterachse (3) sind somit gegen den Druckmittel-Vorratsbehälter (44) des ersten Bremskreises (I) abgesperrt und mit der Druckmittelsenke (Atmosphäre) verbunden. Die Steuerkammer der ersten Steuerventileinrichtung (7) ist drucklos. Die Hilfsdruckkammern der Bremszylinder (2 und 4) der Hinterachse (3) sind über das ihnen zugeordnete steuerbare Ventil (51) mit der Druckmittelsenke verbunden. Die Bremsen an der Hinterachse (3) sind durch die Kraft der Speicherfedern der als Federspeicher-Bremszylinder ausgebildeten Bremszylinder (2 und 4) der Hinterachse (3) angelegt. Der Steuereingang (53) des steuerbaren Ventils (51) ist über das Handbremsventil (50) gegen den Druckmittel-Vorratsbehälter (45) des dritten Bremskreises (III) abgesperrt und mit der Atmosphäre verbunden.

Am ersten Druckmitteleingang (39) des Motorwagen-Bremsventils (41) steht Druckmittel aus dem Druckmittel-Vorratsbehälter (44) des ersten Bremskreises (I) und am zweiten Druckmitteleingang (40) des Motorwagen-Bremsventils (41) steht Druckmittel aus dem Druckmittel-Vorratsbehälter (43) des zweiten Bremskreises (II) an. Die beiden als Steuerausgänge dienenden Druckmittelausgänge (37 und 38) des Motorwagen-Bremsventils (41) sind gegen die ihnen zugeordneten Druckmitteleingänge (39 und 40) mittels Ventileinrichtungen des Motorwagen-Bremsventils (41) abgesperrt.

Soll zu Beginn einer Fahrt die Feststellbremse des Fahrzeugs gelöst werden, wird das von einer Betätigung des Bremswertgebers (41) unabhängig betätigbare Handbremsventil (50) von seiner Bremsstellung in seine Bremslösestellung gebracht. Dabei wird das Handbremsventil (50) in der Weise umgeschaltet, daß es sowohl den Steuereingang (53) des den Hilfsdruckkammern der Bremszylinder (2 und 4) der Hinterachse (3) zugeordneten steuerbaren Ventils (51) als auch den Steuereingang (17) der dem ersten Bremszylinder (33) der Vorderachse (32) zugeordneten zusätzlichen Steuerventileinrichtung (22) gegen die Druckmittelsenke absperrt und mit dem Druckmittel-Vorratsbehälter (45) des dritten Bremskreises (III) verbindet. Über das steuerbare Ventil (51) und die zu den Hilfsdruckkammern der Bremszylinder (2 und 4) der Hinterachse (3) hinführenden Druckmittelleitungen (36 und 60) wird dann Druckmittel aus dem Druckmittel-Vorratsbehälter (45) des dritten Bremskreises (III) in die Hilfsdruckkammern der Bremszylinder (2 und 4) der Hinterachse (3) eingesteuert, wodurch dann die Bremskolben der Bremszylinder (2 und 4) gegen die Kraft der Speicherfedern in ihre Bremslösestellung gebracht werden.

Gleichzeitig mit diesen Vorgängen gelangt Druckmittel aus dem Druckmittel-Vorratsbehälter (45) des dritten Bremskreises (III) über die Druckmittelleitung (56), das Handbremsventil (50), die Druckmittelleitung (16) und den Steuereingang (17) in die Steuerkammer (65) der zusätzlichen Steuerventileinrichtung (22). Der sich in der Steuerkammer (65) aufbauende, den Steuerkolben (72) beaufschlagende Druck und der in der Druckmittelausgangskammer (77) anstehende Druck, welcher auf die am Fortsatz (76) des Steuerkolbens (72) angeordnete Wirkfläche (69) in der gleichen Richtung auf den Steuerkolben (72) einwirkt wie der Druck in der Steuerkammer (65), bewirken, daß der Steuerkolben (72) gegen die Kraft der Feder (67) in Richtung von der Steuerkammer (65) weg verschoben wird, so weit, bis der Steuerkolben (72) am zweiten Gehäuseteil (62) oder an einem Anschlag im zweiten Gehäuseteil (62) zur Anlage kommt. Bei diesem Vorgang folgt das von der Feder (66) belastete Ventilglied (80) dem Steuerkolben (72) so weit, bis es am Einlaßventilsitz (78) zur Anlage kommt und der am Fortsatz (76) des Steuerkolbens (72) angeordnete Auslaßventilsitz (79) vom Ventilglied (80) abhebt. Das Einlaßventil (78, 80) ist dann geschlossen und das Auslaßventil (79, 80) befindet sich dann in seiner Offenstellung. Die Druckmittelausgangskammer (77) ist dann mittels des geschlossenen Einlaßventils (78, 80) gegen die Druckmitteleingangskammer (81) abgesperrt und über das geöffnete Auslaßventil (79, 80), den Druckmittelauslaß (20), die Druckmittelleitungen (11 und 29) und das geöffnete Auslaßventil der zweiten Steuerventileinrichtung (27) mit der Druckmittelsenke (Atmosphäre) verbunden. Der Druck im ersten Bremszylinder (33) baut sich zur Druckmittelsenke hin ab. Beide Bremsen an der Vorderachse (32) des Fahrzeugs sind dann gelöst.

Wird das Motorwagen-Bremsventil (41) zwecks Einleitens eines Bremsvorgangs betätigt, so werden die Ventileinrichtungen des Motorwagen-Bremsventils (41) in der Weise umgeschaltet, daß die Druckmittelausgänge (37 und 38) mit den ihnen zugeordneten Druckmitteleingängen (39 und 40) verbunden werden.

Vom Motorwagen-Bremsventil (41) wird über dessen ersten Druckmittelausgang (37) ein als dem ersten Bremskreis (I) zugeordnetes Steuersignal dienender Steuerdruck in die Steuerkammer der ersten Steuerventileinrichtung (7) eingesteuert. Gleichzeitig gelangt vom zweiten Druckmittelausgang (38) des Motorwagen-Bremsventils (41) ein als dem zweiten Bremskreis (II) zugeordnetes Steuersignal dienender Steuerdruck in die Steuerkammer der zweiten Steuerventileinrichtung (27). Die erste Steuerventileinrichtung (7) und die zweite Steuerventileinrichtung (27) schalten in der Weise um, daß die Druckmittelausgangskammer der ersten Steuerventileinrichtung (7) gegen die Druckmittelsenke abgesperrt und mit der ihr zugeordneten Druckmitteleingangskammer verbunden wird und ebenso die Druckmittelausgangskammer der zweiten Steuerventileinrichtung (27) gegen die Druckmittelsenke abgesperrt und mit der ihr zugeordneten Druckmitteleingangskammer verbunden wird.

Die Betriebsdruckkammern der Bremszylinder (2 und 4) der Hinterachse (3) werden dann mit dem von der ersten Steuerventileinrichtung (7) ausgesteuerten, vom Steuerdruck für den ersten Bremskreis (I) abhängigen Druck beaufschlagt, bis die erste Steuerventileinrichtung (7) eine Abschlußstellung erreicht hat (Einlaß- und Auslaßventil sind geschlossen).

Von der Druckmittelausgangskammer der zweiten Steuerventileinrichtung (27) gelangt über die Druckmittelleitungen (29 und 11) Druckmittel aus dem Druckmittel-Vorratsbehälter (43) für den zweiten Bremskreis (II) einerseits in den zweiten Bremszylinder (30) und andererseits durch den als ein weiterer Druckmitteleingang dienenden Druckmittelauslaß (20) und das geöffnete Auslaßventil (79, 80) der zusätzlichen Steuerventileinrichtung (22) in die Druckmittelausgangskammer (77) der zusätzlichen Steuerventileinrichtung (22) und von dieser weiter durch den Druckmittelausgang (21) sowie die Druckmittelleitung (23) in den ersten Bremszylinder (33) der Vorderachse (32) des Fahrzeugs. In die beiden Bremszylinder (30 und 33) wird von der zweiten Steuerventileinrichtung (27) solange Druck eingesteuert, bis die zweite Steuerventileinrichtung (27) eine Abschlußstellung erreicht hat (Einlaß- und Auslaßventil sind geschlossen). Durch den sich in der Druckmittelausgangskammer (77) der zusätzlichen Steuerventileinrichtung (22) aufbauenden und die zusätzliche Wirkfläche (69) des Steuerkolbens(72) beaufschlagenden Druck des zweiten Bremskreises (II) ist sichergestellt, daß das Auslaßventil (79, 80) der zusätzlichen Steuerventileinrichtung (22) in seiner Offenstellung und das Einlaßventil (78, 80) in seiner Schließstellung gehalten wird.

Die Druckmitteleingangskammer (81) und die Druckmittelausgangskammer (77) der zusätzlichen Steuerventileinrichtung (22) sind bei intaktem zweiten Bremskreis (II) mittels des geschlossenen Einlaßventils (78, 80) gegeneinander abgesperrt, so daß der Druck des Druckmittel-Vorratsbehälters (43) des zweiten Bremskreises (II) und der Druck des Druckmittel-Vorratsbehälters (45) des dritten Bremskreises (III) sich nicht vermischen können.

Soll der Bremsvorgang beendet werden, so wird das Motorwagen-Bremsventil (41) in seine Ausgangsstellung zurückgebracht. Die Verbindung zwischen dem Druckmittel-Vorratsbehälter (44) des ersten Bremskreises (I) und der Steuerkammer der ersten Steuerventileinrichtung (7) sowie die Verbindung zwischen dem Druckmittel-Vorratsbehälter (43) des zweiten Bremskreises (II) und der Steuerkammer der zweiten Steuerventileinrichtung (27) wird unterbrochen. Sowohl die Steuerkammer der zweiten Steuerventileinrichtung (27) als auch die Steuerkammer der ersten Steuerventileinrichtung (7) werden über das Motorwagen-Bremsventil (41) mit der Druckmittelsenke (Atmosphäre) verbunden. Durch den dann in den Steuerkammern dieser Steuerventileinrichtungen erfolgenden Druckabbau gelangen das Auslaßventil der ersten Steuerventileinrichtung (7) und das Auslaßventil der zweiten Steuerventileinrichtung (27) in ihre Offenstellung.

Der zweite Bremszylinder (30) der Vorderachse (32) des Fahrzeugs wird über das geöffnete Auslaßventil der zweiten Steuerventileinrichtung (27) mit der Druckmittelsenke (Atmosphäre) verbunden. Die Druckmittelausgangskammer (77) der zusätzlichen Steuerventileinrichtung (22) und somit auch der erste Bremszylinder (33) der Vorderachse (32) des Fahrzeugs werden über das geöffnete Auslaßventil (79, 80) und den Druckmittelauslaß (20) der zusätzlichen Steuerventileinrichtung (22) und das geöffnete Auslaßventil der mit der zusätzlichen Steuerventileinrichtung (22) verbundenen zweiten Steuerventileinrichtung (27) ebenfalls mit der Druckmittelsenke (Atmosphäre) verbunden.

Gleichzeitig werden die Betriebsdruckkammern der als Federspeicher-Bremszylinder ausgebildeten Bremszylinder (2 und 4) der Hinterachse (3) des Fahrzeugs über das geöffnete Auslaßventil der ersten Steuerventileinrichtung (7) mit der Druckmittelsenke (Atmosphäre) verbunden.

Dadurch, daß über das Handbremsventil (50) Druckmittel aus dem Druckmittel-Vorratsbehälter (45) des dritten Bremskreises (III) in der Steuerkammer (65) der zusätzlichen Steuerventileinrichtung (22) ansteht, verbleibt der Steuerkolben (72) der zusätzlichen Steuerventileinrichtung (22) in der Position, in welcher er das Auslaßventil (79, 80) der zusätzlichen Steuerventileinrichtung (22) in seiner Offenstellung hält.

Tritt im zweiten Bremskreis (II) ein Defekt auf, z. B. Bruch einer der Druckmittelleitungen (15, 12, 29 oder 11), so kann bei einem Bremsvorgang entweder die zweite Steuerventileinrichtung (27) bei Betätigen des Motorwagen-Bremsventils (41) nicht mehr angesteuert werden oder Druckmittel aus dem Druckmittel-Vorratsbehälter (43) des zweiten Bremskreises (II) strömt über die defekte Druckmittelleitung (11 oder 12) zur Druckmittelsenke (Atmosphäre) hin ab. Vom Druckmittel-Vorratsbehälter (43) des zweiten Bremskreises (II) kann in einem solchen Fall kein Druckmittel mehr in die Bremszylinder (30 und 33) der Vorderachse (32) gelangen. Das Fahrzeug wird jetzt nur mit den der Hinterachse (3) zugeordneten Bremsen verzögert.

Sobald der Fahrer des Fahrzeugs die schlechtere Verzögerung des Fahrzeugs beim Bremsen bemerkt hat, schaltet er das Handbremsventil (50) in die Parkstellung um. Die Steuerkammer des steuerbaren Ventils (51) und die Steuerkammer (65) der zusätzlichen Steuerventileinrichtung (22) sind dann mittels des Handbremsventils (50) gegen den Druckmittel-Vorratsbehälter (45) des dritten Bremskreises (III) abgesperrt und mit der Druckmittelsenke (Atmosphäre) verbunden. Das steuerbare Ventil (51) wird dadurch in der Weise umgeschaltet, daß es die Hilfsdruckkammern der als Federspeicher-Bremszylinder ausgebildeten Bremszylinder (2 und 4) der Hinterachse (3) gegen die Druckmittelquelle (45) des dritten Bremskreises (III) absperrt und mit der Druckmittelsenke (Atmosphäre) verbindet. Die Bremskolben der Bremszylinder (2 und 4) werden dann zusätzlich von den ihnen zugeordneten Speicherfedern in Bremsrichtung belastet.

Um in einem solchen Fall eine Addition der Kräfte an den Kolbenstangen der Bremszylinder und somit eine unerwünschte Aufstockung der Bremskräfte an den Bremsen der Räder der Hinterachse zu verhindern, kann eine geeignete Einrichtung, wie z.B. ein Überlastventil vorgesehen werden, welches dann die erste Steuerventileinrichtung ersetzt.

Dadurch, daß die Druckmittelausgangskammer (77) der zusätzlichen Steuerventileinrichtung (22) drucklos ist und der Druck in der Steuerkammer (65) der zusätzlichen Steuerventileinrichtung (22) sich zur Druckmittelsenke hin abbaut, überwiegt die der Kraft des Druckes in der Steuerkammer (65) entgegengerichtet auf den Steuerkolben (72) einwirkende Kraft der Feder (67). Der Steuerkolben (72) wird von der Feder (67) in Richtung auf das kombinierte Einlaß- und Auslaßventil (78, 79, 80) zu verschoben. Der Auslaßventilsitz (79) setzt dabei auf das Ventilglied (80) auf, so daß das Auslaßventil (79, 80) dann geschlossen ist. Bei der weiteren Bewegung des Steuerkolbens (72) in der gleichen Richtung wird das Ventilglied (80) vom Einlaßventilsitz (78) abgehoben und das Einlaßventil (78, 80) gelangt in seine Offenstellung. Die Druckmittelausgangskammer (77) der zusätzlichen Steuerventileinrichtung (22) ist dann mittels des geschlossenen Auslaßventils (79, 80) gegen den Druckmittelauslaß (20) und somit gegen die zweite Steuerventileinrichtung (27) abgesperrt und über das geöffnete Einlaßventil (78, 80) mit der Druckmitteleingangskammer (81) und somit mit der von der Druckmittelquelle des zweiten Bremskreises unabhängigen Druckmittelquelle, nämlich dem Druckmittel-Vorratsbehälter (45) des dritten Bremskreises (III), verbunden. Druckmittel aus dem Druckmittel-Vorratsbehälter (45) strömt von der Druckmitteleingangskammer (81) durch das geöffnete Einlaßventil (78, 80) in die Druckmittelausgangskammer (77) der zusätzlichen Steuerventileinrichtung (22) und von dieser durch den Druckmittelausgang (21) sowie die Druckmittelleitung (23) in den ersten Bremszylinder (33) der Vorderachse (32). Die Bremse an dem ersten Rad (34) der Vorderachse (32) des Fahrzeugs erfährt so eine Notbetätigung.

Ist z.B. die vom Druckmittelausgang (21) der zusätzlichen Steuerventileinrichtung (22) zum ersten Bremszylinder (33) hinführende Druckmittelleitung (23) defekt, so daß bei einem Bremsvorgang das von der zweiten Steuerventileinrichtung (27) kommende Druckmittel zur Druckmittelsenke (Atmosphäre) hin abströmt, fallen beide Bremszylinder (33 und 30) aus. Der Fahrer des Fahrzeugs, der dies aufgrund der dann schlechteren Verzögerung des Fahrzeugs bemerkt, bringt dann das Handbremsventil (50) in die Parkstellung. Die Steuerkammer (65) der zusätzlichen Steuerventileinrichtung (22) wird dann über das Handbremsventil (50) entlüftet. Das Auslaßventil (79, 80) der zusätzlichen Steuerventileinrichtung (22) gelangt dadurch in seine Schließstellung und das Einlaßventil (78, 80) gelangt in seine Offenstellung. Der Druckmittelausgang (21) der zusätzlichen Steuerventileinrichtung (22) ist dann gegen den als zusätzlicher Druckmitteleingang dienenden Druckmittelauslaß (20) abgesperrt und mit dem Druckmitteleingang (18) verbunden. Der zweite Bremszylinder (30) der Vorderachse (32) hat dann keine Verbindung mehr mit der defekten Druckmittelleitung (23), so daß das von der zweiten Steuerventileinrichtung (27) ausgesteuerte Druckmittel nicht mehr zur Druckmittelsenke hin abströmen kann. Der zweite Bremszylinder (30) der Vorderachse (32) wird dann mit dem von der zweiten Steuerventileinrichtung (27) kommenden Druckmittel beaufschlagt, so daß wenigstens das eine Rad (31) der Vorderachse des Fahrzeugs gebremst wird.

Soll das Fahrzeug auf einer Strecke mit starkem Gefälle geparkt werden, so werden, wie im vorstehenden bereits beschrieben, durch eine entsprechende Betätigung des Handbremsventils (50) die Hilfsdruckkammern der als Federspeicher-Bremszylinder ausgebildeten Bremszylinder (2 und 4) der Hinterachse (3) des Fahrzeugs entlüftet. Die Bremskolben der Bremszylinder (2 und 4) werden dann durch die Kraft der Speicherfedern in Richtung Bremsbetätigungsstellung verschoben. Gleichzeitig wird die Steuerkammer (65) der zusätzlichen Steuerventileinrichtung (22) über das Handbremsventil (50) entlüftet. Dadurch gelangt das Auslaßventil (79, 80) der zusätzlichen Steuerventileinrichtung (22) in seine Schließstellung und das Einlaßventil (78, 80) in seine Offenstellung. Die so hergestellte Verbindung der Druckmittelausgangskammer (77) der zusätzlichen Steuerventileinrichtung mit der Druckmitteleingangskammer (81) bewirkt, daß der erste Bremszylinder (33) der Vorderachse (32) mit dem Druck des Druckmittel-Vorratsbehälters (45) für den dritten Bremskreis (III) beaufschlagt wird und so in seine Bremsstellung gelangt.

Durch die Anordnung der in besonderer Art und Weise ausgebildeten zusätzlichen Steuerventileinrichtung in der Bremsanlage des Fahrzeugs ist zum einen sichergestellt, daß bei Ausfall des Vorderachsbremskreises (zweiter Bremskreis II) wenigstens die dem einen Rad, vorzugsweise die dem rechten Rad, der Vorderachse des Fahrzeugs zugeordnete Bremse mittels des Handbremsventils mit dem Druck eines anderen Bremskreises betätigt werden kann und zum anderen beim Parken des Fahrzeugs nicht nur die Bremsen der Hinterachse sondern zusätzlich die eine Bremse der Vorderachse des Fahrzeugs angelegt werden kann.

Der Fortsatz (76) des Steuerkolbens (72) kann auch von einem stößelartigen Teil gebildet werden, welches am Steuerkolben (72) angeordnet wird.

Die Bremssteuereinrichtung zum Steuern der zusätzlichen Steuerventileinrichtung kann, wie im Ausführungsbeispiel angegeben, als ein von Hand schaltbares Ventil ausgebildet sein. Anstelle einer Handbetätigung kann natürlich auch eine Fußbetätigung für dieses Ventil vorgesehen werden.

Die zusätzliche Steuerventileinrichtung kann auch als elektrisch oder elektromagnetisch betätigbare Steuerventileinrichtung ausgebildet sein, welche einen mit dem Druckmittelausgang der zweiten Steuerventileinrichtung verbundenen, als ein erster Druckmitteleingang dienenden Druckmittelauslaß, einen mit einer von der Druckmittelquelle für den zweiten Bremskreis unabhängigen Druckmittelquelle verbundenen oder verbindbaren zweiten Druckmitteleingang und einen mit wenigstens einem Bremszylinder einer Achse des Fahrzeugs, verbundenen Druckmittelausgang aufweist, der wahlweise mit dem ersten Druckmitteleingang oder mit dem zweiten Druckmitteleingang verbindbar ist.

Im Rahmen der Erfindung ist es auch möglich, die Bremssteuereinrichtung zum Steuern der zusätzlichen Steuerventileinrichtung als einen elektrischen Bremswertgeber oder auch als eine einfache elektrische Schalteinrichtung auszubilden, mit dessen bzw. mit deren elektrischen Ausgangssignalen die elektrisch- oder elektromagnetisch betätigbare Steuerventileinrichtung oder eine der Steuerkammer der zusätzlichen Steuerventileinrichtung vorgeschaltete elektrisch oder elektromagnetisch betätigbare Ventileinrichtung angesteuert wird. In einem solchen Fall ist es sinnvoll, auch der Steuerkammer des den Hilfsdruckkammern der Bremszylinder der Hinterachse des Fahrzeugs zugeordneten steuerbaren Ventils eine elektrisch oder elektromagnetisch steuerbare Ventileinrichtung vorzuschalten, die mit den elektrischen Ausgangssignalen der Bremssteuereinrichtung angesteuert wird.

Gemäß der Erfindung kann die zusätzliche Steuerventileinrichtung (22) auch zwischen dem Druckmittelausgang (28) der zweiten Steuerventileinrichtung (27) und beiden Bremszylindern (33 und 30) einer Fahrzeugachse (32) angeordnet sein, wobei der Druckmittelauslaß (20) der zusätzlichen Steuerventileinrichtung (22) mit dem Druckmittelausgang (28) der zweiten Steuerventileinrichtung (27) und der Druckmittelausgang (21) der zusätzlichen Steuerventileinrichtung über wenigstens eine Druckmittelleitung mit beiden Bremszylindern (33 und 30) der Fahrzeugachse (32) verbunden ist.

Es ist gemäß der Erfindung auch möglich, den Steuereingang (17) der zusätzlichen Steuerventileinrichtung (22) mit dem Druckmittelausgang (55) der steuerbaren Ventileinrichtung (51) zu verbinden, welche zur Feststellbremseinrichtung gehört und deren Druckmittelausgang (55) mit den Hilfsdruckkammern der Bremszylinder (2 und 4) der einen Achse (3) des Fahrzeugs verbunden ist.

In der Beschreibung ist erwähnt, daß die Bremszylinder über die zugeordneten Steuerventileinrichtungen mit einer Druckmittelquelle oder mit einer Druckmittelsenke verbindbar sind. Eingeschlossen in diese Aussage soll auch sein, daß in die von den Steuerventileinrichtungen zu den Bremszylindern führenden Druckmittelleitungen zusätzliche Regelventile, wie z. B. ABS-Regelventile, geschaltet sein können, über die der zugeordnete Bremszylinder mit der Druckmittelquelle oder mit der Druckmittelsenke verbunden werden kann. Als Druckmittelsenke dient bei einer pneumatisch betätigten Anlage z.B. die Atmosphäre und bei einer hydraulisch betätigten Anlage z.B. ein Sumpf. Bei der in dieser Patentanmeldung beanspruchten druckmittelbetätigten Fahrzeugbremsanlage kann es sich sowohl um eine pneumatisch betätigte Fahrzeugbremsanlage als auch um eine hydraulisch oder kombinierte hydraulisch/pneumatisch betätigte Fahrzeugbremsanlage handeln.

Die erfindungsgemäße Fahrzeugbremsanlage kann pneumatisch, hydraulisch oder auch elektrisch steuerbar sein.

Die Anwendung der Erfindung soll selbstverständlich nicht auf die Bremsen an der Vorderachse eines Fahrzeugs beschränkt sein. Die Erfindung kann ebenso Anwendung finden an den Bremsen der Hinterachse oder an den Bremsen zusätzlicher Achsen des Fahrzeugs.

## Patentansprüche

1. Druckmittelbetätigte Fahrzeugbremsanlage mit wenigstens einem ersten Bremskreis (I) und einem zweiten Bremskreis (II) mit folgenden Merkmalen:
a) dem ersten Bremskreis (I) ist wenigstens ein Bremszylinder (2, 4) zugeordnet, der über eine erste Steuerventileinrichtung (7) in Abhängigkeit von einem dem ersten Bremskreis (I) zugeordneten Steuersignal eines Mehrkreis-Bremswertgebers (41) mit einer Druckmittelquelle (44) für den ersten Bremskreis (I) oder mit einer Druckmittelsenke verbindbar ist;
b) dem zweiten Bremskreis (II) sind ein erster Bremszylinder (33) und ein zweiter Bremszylinder (30) zugeordnet, die über eine zweite Steuerventileinrichtung (27) in Abhängigkeit von einem dem zweiten Bremskreis (II) zugeordneten Steuersignal des Mehrkreis-Bremswertgebers (41) mit einer zweiten Druckmittelquelle (43) für den zweiten Bremskreis (II) oder mit einer Druckmittelsenke verbindbar sind;
c) die zweite Steuerventileinrichtung (27) weist einen mit der Druckmittelquelle (43) für den zweiten Bremskreis (II) verbundenen Druckmitteleingang (26) und einen mit dem ersten Bremszylinder (33) und dem zweiten Bremszylinder (30) verbundenen Druckmittelausgang (28) auf;
d) es ist eine zusätzliche Steuerventileinrichtung (22) vorgesehen, die zwischen dem Druckmittelausgang (28) der zweiten Steuerventileinrichtung (27) und wenigstens dem ersten Bremszylinder (33) angeordnet ist, und über die wenigstens der erste Bremszylinder (33) mit einer von der Druckmittelquelle (43) des zweiten Bremskreises (II) unabhängigen Druckmittelquelle (45) oder mit dem Druckmittelausgang (28) der zweiten Steuerventileinrichtung (27) verbindbar ist;
**dadurch gekennzeichnet, daß** zum Steuern der zusätzlichen Steuerventileinrichtung (22) eine Bremssteuereinrichtung (50) vorgesehen ist, deren Betätigung unabhängig ist von einer Betätigung des Bremswertgebers (41).

2. Druckmittelbetätigte Fahrzeugbremsanlage nach Anspruch 1, **dadurch gekennzeichnet, daß** die zusätzliche Steuerventileinrichtung (22) derart ausgebildet ist, daß sie in einer ersten Schaltstellung den ersten Bremszylinder (33) gegen die von der Druckmittelquelle (43) für den zweiten Bremskreis (II) unabhängige Druckmittelquelle (45) absperrt und mit dem Druckmittelausgang (28) der zweiten Steuerventileinrichtung (27) verbindet, und daß sie in einer zweiten Schaltstellung den ersten Bremszylinder (33) gegen den Druckmittelausgang (28) der zweiten Steuerventileinrichtung (27) absperrt und mit der von der Druckmittelquelle (43) für den zweiten Bremskreis (II) unabhängigen Druckmittelquelle (45) verbindet.

3. Druckmittelbetätigte Fahrzeugbremsanlage nach wenigstens einem der vorhergehenden Ansprüche, **gekennzeichnet durch** die folgenden Merkmale:
a) die zusätzliche Steuerventileinrichtung (22) weist eine Druckmitteleingangskammer (81), eine über ein Einlaßventil (78, 80) der zusätzlichen Steuerventileinrichtung (22) mit der Druckmitteleingangskammer (81) verbindbare Druckmittelausgangskammer (77), einen über ein Auslaßventil (79, 80) der zusätzlichen Steuerventileinrichtung (22) mit der Druckmittelausgangskammer (77) verbindbaren Druckmittelauslaß (20) und eine von einem Steuerkolben (72) begrenzte Steuerkammer (65) auf;
b) zum Betätigen des Einlaßventils (78, 80) und des Auslaßventils (79, 80) dient der Steuerkolben (72) ;
c) die Steuerkammer (65) und der Steuerkolben (72) sind so angeordnet und der Steuerkolben (72) ist so ausgebildet und so zum Einlaßventil (78, 80) und Auslaßventil (79, 80) angeordnet, daß bei Einsteuerung von Druckmittel in die Steuerkammer (65) der Steuerkolben (72) sich gegen eine Rückstellkraft in Richtung von der Steuerkammer (65) weg bewegt, wobei das Einlaßventil (78, 80) in seine Schließstellung und das Auslaßventil (79, 80) in seine Offenstellung gelangt, und daß bei einem Abbau des Druckes in der Steuerkammer (65) der Steuerkolben (72) sich unter Einwirkung der Rückstellkraft in Richtung auf die Steuerkammer (65) zu bewegt, wobei das Auslaßventil (79, 80) in seine Schließstellung und das Einlaßventil (78, 80) in seine Offenstellung gelangt.

4. Druckmittelbetätigte Fahrzeugbremsanlage nach Anspruch 3, **gekennzeichnet durch** die folgenden Merkmale:
a) die Steuerkammer (65) wird von dem Steuerkolben (72) und einer Wand (75) begrenzt, wobei die Wand (75) mit ihrer der Steuerkammer (65) abgewandten Seite die Druckmittelausgangskammer (77) begrenzt;
b) der Steuerkolben (72) besitzt auf seiner der Steuerkammer (65) zugewandten Seite einen Fortsatz (76), der **durch** eine in der Wand (75) angeordnete Durchgangsöffnung (71) abgedichtet hindurchgeführt ist und sich in die Druckmittelausgangskammer (77) hineinerstreckt;
c) als Rückstellkraft dient eine Feder (67), welche den Steuerkolben (72) in Richtung auf die Steuerkammer (65) zu beaufschlagt.

5. Druckmittelbetätigte Fahrzeugbremsanlage nach Anspruch 4, **dadurch gekennzeichnet, daß** der Fortsatz (76) eine vom Druckmittel der Druckmittelausgangskammer (77) beaufschlagte Fläche aufweist,die als eine zusätzliche Wirkfläche (69) für den Steuerkolben (72) dient, und die so am Fortsatz (76) angeordnet ist, daß sie vom Druck der Druckmittelausgangskammer (77) der Rückstellkraft entgegengerichtet beaufschlagt wird.

6. Druckmittelbetätigte Fahrzeugbremsanlage nach wenigstens einem der vorhergehenden Ansprüche, **gekennzeichnet durch** die folgenden Merkmale:
a) die Druckmitteleingangskammer (81) der zusätzlichen Steuerventileinrichtung (22) ist mit der Druckmittelquelle (45), die von der Druckmittelquelle (43) für den zweiten Bremskreis (II) unabhängig ist, verbunden, wobei zwischen der Druckmitteleingangskammer (81) und der von der Druckmittelquelle (43) für den zweiten Bremskreis (II) unabhängigen Druckmittelquelle (45) Mittel (19) zum Absichern der beiden Druckmittelquellen (43 und 45) gegeneinander angeordnet sind;
b) die Druckmittelausgangskammer (77) der zusätzlichen Steuerventileinrichtung (22) ist mit dem dem zweiten Bremskreis (II) zugeordneten ersten Bremszylinder (33) verbunden;
c) der Druckmittelauslaß (20) der zusätzlichen Steuerventileinrichtung (22) ist mit dem Druckmittelausgang (28) der zweiten Steuerventileinrichtung (27) verbunden;
d) die Steuerkammer (65) der zusätzlichen Steuerventileinrichtung (22) ist über die Bremssteuereinrichtung (50) oder über eine der Steuerkammer (65) vorgeschaltete Elektromagnet-Ventileinrichtung, welche mittels der Bremssteuereinrichtung (50) steuerbar ist, mit der von der Druckmittelquelle (43) für den zweiten Bremskreis (II) unabhängigen Druckmittelquelle (45) verbindbar;
e) der Druckmitteleingang (26) der zweiten Steuerventileinrichtung (27) ist mit der Druckmittelquelle (43) für den zweiten Bremskreis (II) verbunden;
f) der Druckmittelausgang (28) der zweiten Steuerventileinrichtung (27) ist mit dem dem zweiten Bremskreis (II) zugeordneten zweiten Bremszylinder (30) und mit dem Druckmittelauslaß (20) der zusätzlichen Steuerventileinrichtung (22) verbunden;
g) die zweite Steuerventileinrichtung (27) besitzt einen Steuereingang (25), der über den Mehrkreis-Bremswertgeber (41) oder über eine von einem elektrischen Steuersignal des Mehrkreis-Bremswertgebers (41) ansteuerbare, dem Steuereingang (25) vorgeschaltete Elektromagnet-Ventileinrichtung mit der Druckmittelquelle (43) für den zweiten Bremskreis (II) verbindbar ist.

7. Druckmittelbetätigte Fahrzeugbremsanlage nach wenigstens einem der vorhergehenden Ansprüche, **gekennzeichnet durch** die folgenden Merkmale:
a) die Bremssteuereinrichtung (50) ist als schaltbares Ventil ausgebildet, welches einen Druckmitteleingang (59), einen Druckmittelausgang (58) und einen zu einer Druckmittelsenke hinführenden Druckmittelauslaß besitzt;
b) der Druckmitteleingang (59) ist mit der von der Druckmittelquelle (43) für den zweiten Bremskreis (II) unabhängigen Druckmittelquelle (45) verbunden und der Druckmittelausgang (58) steht mit der Steuerkammer (65) der zusätzlichen Steuerventileinrichtung (22) in Verbindung.

8. Druckmittelbetätigte Fahrzeugbremsanlage nach wenigstens einem der vorhergehenden Ansprüche, **gekennzeichnet durch** die folgenden Merkmale:
a) die Bremssteuereinrichtung (50) ist als schaltbares Feststellbremsventil ausgebildet, welches einen Druckmitteleingang (59) und einen Druckmittelausgang (58) sowie einen Druckmittelauslaß besitzt;
b) der Druckmitteleingang (59) ist mit der von der Druckmittelquelle (43) für den zweiten Bremskreis (II) unabhängigen Druckmittelquelle (45) verbunden;
c) der Druckmittelausgang (58) ist einerseits mit dem Steuereingang (17) der zusätzlichen Steuerventileinrichtung (22) und andererseits mit einem Steuereingang (53) eines steuerbaren Ventils (51) einer Feststellbremseinrichtung für die Räder (1, 5) einer Achse (3) des Fahrzeugs verbunden.

9. Druckmittelbetätigte Fahrzeugbremsanlage nach wenigstens einem der vorhergehenden Ansprüche, **gekennzeichnet durch** die folgenden Merkmale:
a) die Bremssteuereinrichtung (50) ist als schaltbares Feststellbremsventil ausgebildet, welches einen Druckmitteleingang (59) und einen Druckmittelausgang (58) sowie einen Druckmittelauslaß besitzt;
b) der Druckmitteleingang (59) ist mit der von der Druckmittelquelle (43) für den zweiten Bremskreis (II) unabhängigen Druckmittelquelle (45) verbunden;
c) der Druckmittelausgang (58) ist mit einem Steuereingang (53) einer zu einer Feststellbremseinrichtung gehörigen steuerbaren Ventileinrichtung (51) verbunden, welche einen Druckmitteleingang (54) und einen Druckmittelausgang (55) sowie einen Druckmittelauslaß aufweist;
d) der Druckmitteleingang (54) der steuerbaren Ventileinrichtung (51) ist mit der von der Druckmittelquelle (43) für den zweiten Bremskreis (II) unabhängigen Druckmittelquelle (45) verbunden;
e) der Druckmittelausgang (55) der steuerbaren Ventileinrichtung (51) ist einerseits mit wenigstens einem zu der Feststellbremseinrichtung gehörigen Bremszylinder (2, 4) und andererseits mit dem Steuereingang (17) der zusätzlichen Steuerventileinrichtung (22) verbunden.

10. Druckmittelbetätigte Fahrzeugbremsanlage nach wenigstens einem der vorhergehenden Ansprüche, **dadurch gekennzeichnet, daß** die zusätzliche Steuerventileinrichtung als elektrisch oder elektromagnetisch betätigbare Steuerventileinrichtung ausgebildet ist, die einen mit dem Druckmittelausgang der zweiten Steuerventileinrichtung (27) verbundenen ersten Druckmitteleingang, einen mit einer von der Druckmittelquelle (43) für den zweiten Bremskreis (II) unabhängigen Druckmittelquelle (45) verbundenen oder verbindbaren zweiten Druckmitteleingang und einen mit wenigstens einem Bremszylinder (33, 30) einer Fahrzeugachse verbundenen Druckmittelausgang aufweist, wobei der Druckmittelausgang wahlweise mit der von der Druckmittelquelle (43) für den zweiten Bremskreis (II) unabhängigen Druckmittelquelle (45) oder mit dem Druckmittelausgang (28) der zweiten Steuerventileinrichtung (27) verbindbar ist.

11. Druckmittelbetätigte Fahrzeugbremsanlage nach wenigstens einem der vorhergehenden Ansprüche, **dadurch gekennzeichnet, daß** die Bremssteuereinrichtung als elektrische Schalteinrichtung ausgebildet ist, mit deren elektrischen Ausgangssignalen eine der Steuerkammer der zusätzlichen Steuerventileinrichtung (22) vorgeschaltete elektrisch oder elektromagnetisch steuerbare Ventileinrichtung ansteuerbar ist.

12. Druckmittelbetätigte Fahrzeugbremsanlage nach wenigstens einem der vorhergehenden Ansprüche, **dadurch gekennzeichnet, daß** den Bremszylindern (2, 4) der einen Fahrzeugachse (3) eine zu einer Feststellbremseinrichtung gehörige elektrisch oder elektromagnetisch ansteuerbare Ventileinrichtung zugeordnet ist, die mit den Ausgangssignalen der elektrischen Schalteinrichtung ansteuerbar ist.

13. Druckmittelbetätigte Fahrzeugbremsanlage nach wenigstens einem der vorhergehenden Ansprüche, **dadurch gekennzeichnet, daß** die zusätzliche Steuerventileinrichtung (22) zwischen dem Druckmittelausgang (28) der zweiten Steuerventileinrichtung (27) und den beiden Bremszylindern (30 und 33) der einen Fahrzeugachse (32) angeordnet ist.

14. Druckmittelbetätigte Fahrzeugbremsanlage nach wenigstens einem der vorhergehenden Ansprüche, **dadurch gekennzeichnet, daß** die Bremssteuereinrichtung als elektrische Schalteinrichtung ausgebildet ist, mit deren Ausgangssignalen die elektrisch oder elektromagnetisch betätigbare zusätzliche Steuerventileinrichtung ansteuerbar ist.

## Claims

1. Pressure-medium-operated vehicle braking system having at least a first brake circuit (I) and a second brake circuit (II), having the following features:
a) the first brake circuit (I) is associated with at least one brake cylinder (2, 4) which, in dependence upon a control signal of a multi-circuit brake signal transmitter (41) associated with the first brake circuit (I), is connectible by way of a first control valve device (7) to a pressure medium source (44) for the first brake circuit (I) or to a pressure medium sink;
b) the second brake circuit (II) is associated with a first brake cylinder (33) and a second brake cylinder (30) which, in dependence upon a control signal of the multi-circuit brake signal transmitter (41) associated with the second brake circuit (II), are connectible by way of a second control valve device (27) to a second pressure medium source (43) for the second brake circuit (II) or to a pressure medium sink;
c) the second control valve device (27) has a pressure medium input (26), which is connected to the pressure medium source (43) for the second brake circuit (II), and a pressure medium output (28) which is connected to the first brake cylinder (33) and to the second brake cylinder (30);
d) an additional control valve device (22) is provided which is arranged between the pressure medium output (28) of the second control valve device (27) and at least the first brake cylinder (33), and by means of which at least the first brake cylinder (33) is connectible to a pressure medium source (45) that is independent of the pressure medium source (43) of the second brake circuit (II) or to the pressure medium output (28) of the second control valve device (27);
**characterized in that** for controlling the additional control valve device (22) there is provided a braking control device (50) the operation of which is independent of operation of the brake signal transmitter (41).

2. Pressure-medium-operated vehicle braking system according to claim 1, **characterized in that** the additional control valve device (22) is so constructed that in a first switching position it blocks the first brake cylinder (33) against the pressure medium source (45) that is independent of the pressure medium source (43) for the second brake circuit (II) and connects it to the pressure medium output (28) of the second control valve device (27), and in a second switching position it blocks the first brake cylinder (33) against the pressure medium output (28) of the second control valve device (27) and connects it to the pressure medium source (45) that is independent of the pressure medium source (43) for the second brake circuit (II).

3. Pressure-medium-operated vehicle braking system according to at least one of the preceding claims, **characterized by** the following features:
a) the additional control valve device (22) has a pressure medium input chamber (81); a pressure medium output chamber (77), which is connectible to the pressure medium input chamber (81) by way of an inlet valve (78, 80) of the additional control valve device (22); a pressure medium outlet (20), which is connectible to the pressure medium output chamber (77) by way of an outlet valve (79, 80) of the additional control valve device (22); and a control chamber (65) defined by a control piston (72);
b) the control piston (72) serves for operating the inlet valve (78, 80) and the outlet valve (79, 80);
c) the control chamber (65) and the control piston (72) are so arranged and the control piston (72) is so constructed and so arranged relative to the inlet valve (78, 80) and the outlet valve (79, 80) that when pressure medium is fed into the control chamber (65) the control piston (72) moves, against a restoring force, in the direction away from the control chamber (65), the inlet valve (78, 80) moving into its closed position and the outlet valve (79, 80) moving into its open position, and when the pressure in the control chamber (65) falls the control piston (72) moves, under the action of the restoring force, in the direction towards the control chamber (65), the outlet valve (79, 80) moving into its closed position and the inlet valve (78, 80) moving into its open position.

4. Pressure-medium-operated vehicle braking system according to claim 3, **characterized by** the following features:
a) the control chamber (65) is defined by the control piston (72) and a wall (75), the side of the wall (75) remote from the control chamber (65) defining the pressure medium output chamber (77);
b) the control piston (72) has, on its side facing the control chamber (65), an extension piece (76) which passes, sealed, through a passageway (71) arranged in the wall (75) and extends into the pressure medium output chamber (77);
c) as the restoring force there is used a spring (67) which acts upon the control piston (72) in the direction towards the control chamber (65).

5. Pressure-medium-operated vehicle braking system according to claim 4, **characterized in that** the extension piece (76) has a surface that is acted upon by the pressure medium of the pressure medium output chamber (77), which surface serves as an additional effective surface (69) for the control piston (72) and is so arranged on the extension piece (76) that it is acted upon by the pressure of the pressure medium output chamber (77) in the opposite direction to the restoring force.

6. Pressure-medium-operated vehicle braking system according to at least one of the preceding claims, **characterized by** the following features:
a) the pressure medium input chamber (81) of the additional control valve device (22) is connected to the pressure medium source (45) that is independent of the pressure medium source (43) for the second brake circuit (II), there being arranged between the pressure medium input chamber (81) and the pressure medium source (45) that is independent of the pressure medium source (43) for the second brake circuit (II) means (19) for safeguarding the two pressure medium sources (43 and 45) with respect to one another;
b) the pressure medium output chamber (77) of the additional control valve device (22) is connected to the first brake cylinder (33) associated with the second brake circuit (II);
c) the pressure medium outlet (20) of the additional control valve device (22) is connected to the pressure medium output (28) of the second control valve device (27);
d) the control chamber (65) of the additional control valve device (22) is connectible, by way of the braking control device (50) or by way of an electromagnetic valve device arranged upstream of the control chamber (65) and controllable by means of the braking control device (50), to the pressure medium source (45) that is independent of the pressure medium source (43) for the second brake circuit (II);
e) the pressure medium input (26) of the second control valve device (27) is connected to the pressure medium source (43) for the second brake circuit (II);
f) the pressure medium output (28) of the second control valve device (27) is connected to the second brake cylinder (30) associated with the second brake circuit (II) and to the pressure medium outlet (20) of the additional control valve device (22);
g) the second control valve device (27) has a control input (25), which is connectible to the pressure medium source (43) for the second brake circuit (II) by way of the multi-circuit brake signal transmitter (41) or by way of an electromagnetic valve device, which is actuatable by an electrical control signal of the multi-circuit brake signal transmitter (41) and is arranged upstream of the control input (25).

7. Pressure-medium-operated vehicle braking system according to at least one of the preceding claims, **characterized by** the following features:
a) the braking control device (50) is in the form of a switchable valve, which has a pressure medium input (59), a pressure medium output (58) and a pressure medium outlet leading to a pressure medium sink;
b) the pressure medium input (59) is connected to the pressure medium source (45) that is independent of the pressure medium source (43) for the second brake circuit (II), and the pressure medium output (58) is connected to the control chamber (65) of the additional control valve device (22).

8. Pressure-medium-operated vehicle braking system according to at least one of the preceding claims, **characterized by** the following features:
a) the braking control device (50) is in the form of a switchable hand brake valve which has a pressure medium input (59) and a pressure medium output (58) as well as a pressure medium outlet;
b) the pressure medium input (59) is connected to the pressure medium source (45) that is independent of the pressure medium source (43) for the second brake circuit (II);
c) the pressure medium output (58) is connected on the one hand to the control input (17) of the additional control valve device (22) and on the other hand to a control input (53) of a controllable valve (51) of a hand brake device for the wheels (1, 5) of an axle (3) of the vehicle.

9. Pressure-medium-operated vehicle braking system according to at least one of the preceding claims, **characterized by** the following features:
a) the braking control device (50) is in the form of a switchable hand brake valve which has a pressure medium input (59) and a pressure medium output (58) as well as a pressure medium outlet;
b) the pressure medium input (59) is connected to the pressure medium source (45) that is independent of the pressure medium source (43) for the second brake circuit (II);
c) the pressure medium output (58) is connected to a control input (53) of a controllable valve device (51) belonging to a hand brake device, which valve device has a pressure medium input (54) and a pressure medium output (55) as well as a pressure medium outlet;
d) the pressure medium input (54) of the controllable valve device (51) is connected to the pressure medium source (45) that is independent of the pressure medium source (43) for the second brake circuit (II);
e) the pressure medium output (55) of the controllable valve device (51) is connected on the one hand to at least one brake cylinder (2, 4) belonging to the hand brake device and on the other hand to the control input (17) of the additional control valve device (22).

10. Pressure-medium-operated vehicle braking system according to at least one of the preceding claims, **characterized in that** the additional control valve device is in the form of an electrically or electromagnetically operable control valve device which has a first pressure medium input, which is connected to the pressure medium output of the second control valve device (27); a second pressure medium input, which is connected or connectible to a pressure medium source (45) that is independent of the pressure medium source (43) for the second brake circuit (II); and a pressure medium output connected to at least one brake cylinder (33, 30) of a vehicle axle, the pressure medium output being connectible at will to the pressure medium source (45) that is independent of the pressure medium source (43) for the second brake circuit (II) or to the pressure medium output (28) of the second control valve device (27).

11. Pressure-medium-operated vehicle braking system according to at least one of the preceding claims, **characterized in that** the braking control device is in the form of an electrical switching device, the electrical output signals of which are used to actuate an electrically or electromagnetically controllable valve device arranged upstream of the control chamber of the additional control valve device (22).

12. Pressure-medium-operated vehicle braking system according to at least one of the preceding claims, **characterized in that** the brake cylinders (2, 4) of one vehicle axle (3) are associated with an electrically or electromagnetically actuatable valve device belonging to a hand brake device, which valve device is actuatable by the output signals of the electrical switching device.

13. Pressure-medium-operated vehicle braking system according to at least one of the preceding claims, **characterized in that** the additional control valve device (22) is arranged between the pressure medium output (28) of the second control valve device (27) and the two brake cylinders (30 and 33) of the one vehicle axle (32).

14. Pressure-medium-operated vehicle braking system according to at least one of the preceding claims, **characterized in that** the braking control device is in the form of an electrical switching device, the output signals of which are used to actuate the electrically or electromagnetically operable additional control valve device.

## Revendications

1. Système de freinage actionné par pression pour véhicules comportant au moins un premier circuit de freinage (I) et un second circuit de freinage (II) présentant les caractéristiques suivantes :
a) au premier circuit de freinage (I) est associé au moins un cylindre de freinage (2, 4), qui peut être relié à une source de pression (44) pour le premier circuit de freinage (I) ou à un collecteur hydraulique par l'intermédiaire d'un premier dispositif de soupape de commande (7) en fonction d'un signal de commande associé au premier circuit de freinage (I) d'un transmetteur de valeur de freinage à plusieurs circuits (41) ;
b) au second circuit de freinage (II) sont associés un premier cylindre de freinage (33) et un second cylindre de freinage (30), qui peuvent être reliés à une seconde source de pression (43) pour le second circuit de freinage (II) ou à un collecteur hydraulique par l'intermédiaire d'un second dispositif de soupape de commande (27) en fonction d'un signal de commande associé au second circuit de freinage (II) du transmetteur de valeur de freinage à plusieurs circuits (41) ;
c) le second dispositif de soupape de commande (27) présente une admission de pression (26) reliée à la source de pression (43) pour le second circuit de freinage (II) et un échappement de pression (28) relié au premier cylindre de freinage (33) et au second cylindre de freinage (30) ;
d) un dispositif de soupape de commande supplémentaire (22) est prévu, qui est disposé entre l'échappement de pression (28) du second dispositif de soupape de commande (27) et au moins le premier cylindre de freinage (33), et par l'intermédiaire duquel au moins le premier cylindre de freinage (33) peut être relié à une source de pression (45) indépendante de la source de pression (43) du second circuit de freinage (II) ou à l'échappement de pression (28) du second dispositif de soupape de commande (27) ;
**caractérisé en ce que**, en vue de la commande du dispositif de soupape de commande supplémentaire (22) est prévu un mécanisme de commande de freinage (50), dont l'actionnement est indépendant de l'actionnement du transmetteur de valeur de freinage (41).

2. Système de freinage actionné par pression pour véhicules selon la revendication 1, **caractérisé en ce que** le dispositif de soupape de commande supplémentaire (22) est réalisé de sorte qu'il ferme le premier cylindre de freinage (33) contre la source de pression (45) indépendante de la source de pression (43) pour le second circuit de freinage (II) dans une première position de commutation et relie à l'échappement de pression (28) du second dispositif de soupape de commande (27), et **en ce qu'**il ferme le premier cylindre de freinage (33) contre l'échappement de pression (28) du second dispositif de soupape de commande (27) dans une seconde position de commutation et relie à la source de pression (45) indépendante de la source de pression (43) pour le second circuit de freinage (II).

3. Système de freinage actionné par pression pour véhicules selon au moins l'une des revendications précédentes, **caractérisé par** les caractéristiques suivantes:
a) le dispositif de soupape de commande supplémentaire (22) présente une chambre d'admission de pression (81), une chambre d'échappement de pression (77) pouvant être reliée à la chambre d'admission de pression (81) par l'intermédiaire d'une soupape d'admission (78, 80) du dispositif de soupape de commande supplémentaire (22), un échappement de pression (20) pouvant être relié à la chambre d'échappement de pression (77) par l'intermédiaire d'une soupape d'échappement (79, 80) du dispositif de soupape de commande supplémentaire (22) et une chambre de commande (65) limitée par un piston de commande(72) ;
b) le piston de commande (72) est utilisé pour l'actionnement de la soupape d'admission (78, 80) et de la soupape d'échappement (79, 80) ;
c) la chambre de commande (65) et le piston de commande (72) sont disposés et le piston de commande (72) est réalisé et disposé par rapport à la soupape d'admission (78, 80) et à la soupape d'échappement (79, 80) de sorte que, en vue de l'injection de pression dans la chambre de commande (65), le piston de commande (72) se déplace à l'encontre d'une force de rappel dans la direction de la chambre de commande (65), où la soupape d'admission (78, 80) atteint sa position fermée et la soupape d'échappement (79, 80) sa position ouverte, et que lors d'une réduction de pression dans la chambre de commande (65), le piston de commande (72) se déplace sous l'effet de la force de rappel dans la direction de la chambre de commande (65), où la soupape d'échappement (79, 80) atteint sa position fermée et la soupape d'admission (78, 80) sa position ouverte.

4. Système de freinage actionné par pression pour véhicules selon la revendication 3, **caractérisé par** les caractéristiques suivantes :
a) la chambre de commande (65) est limitée par le piston de commande (72) et une paroi (75), où la paroi (75) limite la chambre d'échappement de pression (77) par son côté opposé à la chambre de commande (65) ;
b) le piston de commande (72) possède sur son côté tourné vers la chambre de commande (65) un prolongement (76), qui est traversé par un trou traversant (71) disposé dans la paroi (75) étanchéifié et s'étend dans la chambre d'échappement de pression (77) ;
c) comme force de rappel est utilisé un ressort (67), qui alimente le piston de commande (72) dans la direction de la chambre de commande (65).

5. Système de freinage actionné par pression pour véhicules selon la revendication 4, **caractérisé en ce que** le prolongement (76) présente une surface alimentée par la pression de la chambre d'échappement de pression (77), surface qui est utilisée comme une surface active supplémentaire (69) pour le piston de commande (72), et qui est disposée sur le prolongement (76), de sorte qu'elle est alimentée par la pression de la chambre d'échappement de pression (77) dans le sens inverse de la force de rappel.

6. Système de freinage actionné par pression pour véhicules selon au moins l'une des revendications précédentes, **caractérisé par** les caractéristiques suivantes:
a) la chambre d'admission de pression (81) du dispositif de soupape de commande supplémentaire (22) est reliée à la source de pression (45), qui est indépendante de la source de pression (43) pour le second circuit de freinage (II), où des moyens (19) en vue de la protection des deux sources de pression (43 et 45) sont disposés de façon antagoniste entre la chambre d'admission de pression (81) et la source de pression (45) indépendante de la source de pression (43) pour le second circuit de freinage (II) ;
b) la chambre d'échappement de pression (77) du dispositif de soupape de commande supplémentaire (22) est reliée au premier cylindre de freinage (33) associé au second circuit de freinage (II) ;
c) la soupape d'échappement de pression (20) du dispositif de soupape de commande supplémentaire (22) est reliée à l'échappement de pression (28) du second dispositif de soupape de commande (27) ;
d) la chambre de commande (65) du dispositif de soupape de commande supplémentaire (22) peut être reliée à la source de pression (45) indépendante de la source de pression (43) pour le second circuit de freinage (II) par l'intermédiaire du mécanisme de commande de freinage (50) ou par l'intermédiaire d'un dispositif de soupape à électro-aimant placé en amont de la chambre de commande (65), qui peut être commandé par le mécanisme de commande de freinage (50) ;
e) l'admission de pression (26) du second dispositif de soupape de commande (27) est reliée à la source de pression (43) pour le second circuit de freinage (II) ;
f) l'échappement de pression (28) du second dispositif de soupape de commande (27) est relié au second cylindre de freinage (30) associé au second circuit de freinage (II) et à la soupape d'échappement de pression (20) du dispositif de soupape de commande supplémentaire (22) ;
g) le second dispositif de soupape de commande (27) possède une admission de commande (25), qui peut être reliée à la source de pression (43) pour le second circuit de freinage (II) par l'intermédiaire du transmetteur de valeur de freinage à plusieurs circuits (41) ou par l'intermédiaire d'un dispositif de soupape à électro-aimant placé en amont de l'admission de commande (25) pouvant être commandé par un signal de commande électrique du transmetteur de valeur de freinage à plusieurs circuits (41).

7. Système de freinage actionné par pression pour véhicules selon au moins une des revendications précédentes, **caractérisé par** les caractéristiques suivantes :
a) le dispositif de commande de freinage (50) est réalisé sous la forme d'une soupape commutable, qui possède une admission de pression (59), un échappement de pression (58) et une soupape d'échappement de pression aboutissant au collecteur hydraulique;
b) l'admission de pression (59) est reliée à la source de pression (45) indépendante de la source de pression (43) pour le second circuit de freinage (II) et l'échappement de pression (58) est relié à la chambre de commande (65) du dispositif de soupape de commande supplémentaire (22).

8. Système de freinage actionné par pression pour véhicules selon au moins une des revendications précédentes, **caractérisé par** les caractéristiques suivantes :
a) le mécanisme de commande de freinage (50) est réalisé sous la forme d'une soupape de frein de stationnement commutable, qui possède une admission de pression (59) et un échappement de pression (58) ainsi qu'une soupape d'échappement de pression ;
b) l'admission de pression (59) est reliée à la source de pression (45) indépendante de la source de pression (43) pour le second circuit de freinage (II) ;
c) l'échappement de pression (58) est d'une part relié à l'admission de commande (17) du dispositif de soupape de commande supplémentaire (22) et d'autre part à une admission de commande (53) d'une soupape pouvant être commandée (51) d'un mécanisme de frein de stationnement pour les roues (1, 5) d'un essieu (3) d'un véhicule.

9. Système de freinage actionné par pression pour véhicules selon au moins une des revendications précédentes, **caractérisé par** les caractéristiques suivantes :
a) le mécanisme de commande de freinage (50) est réalisé sous la forme d'une soupape de frein de stationnement commutable, qui possède une admission de pression (59) et un échappement de pression (58) ainsi qu'une soupape d'échappement de pression ;
b) l'admission de pression (59) est reliée à la source de pression (45) indépendante de la source de pression (43) pour le second circuit de freinage (II) ;
c) l'échappement de pression (58) est relié à une admission de commande (53) d'un dispositif de soupape (51) pouvant être commandé appartenant à un mécanisme de frein de stationnement, qui présente une admission de pression (50) et un échappement de pression (55) ainsi qu'une soupape d'échappement de pression ;
d) l'admission de pression (54) du dispositif de soupape pouvant être commandé (51) est reliée à la source de pression (45) indépendante de la source de pression (43) pour le second circuit de freinage (II) ;
e) l'échappement de pression (55) du dispositif de soupape pouvant être commandé (51) est relié d'une part à au moins un cylindre de freinage (2, 4) appartenant au mécanisme de frein de stationnement et d'autre part à l'admission de commande (17) du dispositif de soupape de commande supplémentaire (22).

10. Système de freinage actionné par pression pour véhicules selon au moins une des revendications précédentes, **caractérisé en ce que** le dispositif de soupape de commande supplémentaire est réalisé sous la forme d'un dispositif de soupape de commande pouvant être actionné électriquement ou électromagnétiquement, qui présente une première admission de pression reliée à l'échappement de pression du second dispositif de soupape de commande (27), une seconde admission de pression reliée ou pouvant être reliée à une source de pression (45) indépendante de la source de pression (43) pour le second circuit de freinage (II) et un échappement de pression relié à au moins un cylindre de freinage (33, 30) d'un essieu de véhicule, où l'échappement de pression peut être relié au choix à la source de pression (45) indépendante de la source de pression (43) pour le second circuit de freinage (II) ou à l'échappement de pression (28) du second dispositif de soupape de commande (27).

11. Système de freinage actionné par pression pour véhicules selon au moins une des revendications précédentes, **caractérisé en ce que** le mécanisme de commande de freinage est réalisé sous la forme d'un mécanisme de couplage électrique, par les signaux de sortie électriques duquel un dispositif de soupape pouvant être commandé électriquement ou électromagnétiquement placé en amont de la chambre de commande du dispositif de soupape de commande supplémentaire (22) peut être commandé.

12. Système de freinage actionné par pression pour véhicules selon au moins une des revendications précédentes, **caractérisé en ce qu'**aux cylindres de freinage (2, 4) d'un essieu de véhicule (3) est associé un dispositif de soupape pouvant être commandé électriquement ou électromagnétiquement appartenant à un mécanisme de frein de stationnement, dispositif de soupape qui peut être commandé par les signaux de sortie du mécanisme de couplage électrique.

13. Système de freinage actionné par pression pour véhicules selon au moins une des revendications précédentes, **caractérisé en ce que** le dispositif de soupape de commande supplémentaire (22) est disposé entre l'échappement de pression (28) du second dispositif de soupape de commande (27) et les deux cylindres de freinage (30 et 33) de l'essieu de véhicule (32).

14. Système de freinage actionné par pression pour véhicules selon au moins une des revendications précédentes, **caractérisé en ce que** le mécanisme de commande de freinage est réalisé sous la forme d'un mécanisme de couplage électrique, par les signaux de sortie duquel le dispositif de soupape de commande supplémentaire pouvant être commandé électriquement ou électromagnétiquement est commandé.
